# FASCICULE DE BREVET EUROPEEN

(11) **EP 0 404 627 B1**
(45) Date de publication et mention de la délivrance du brevet: **25.08.1993**
(21) Numéro de dépôt: 90401541.9
(22) Date de dépôt: 06.06.1990
(51) Int. Cl.: B60G 7/02

(54) **Train de roues arrière pour véhicule automobile**
Hinterradaufhängung für Kraftfahrzeuge
Rear wheel suspension for motor vehicles

(30) Priorité: 23.06.1989 FR 8908410
(43) Date de publication de la demande: 27.12.1990
(73) Titulaire: AUTOMOBILES PEUGEOT, 75116 Paris (FR); AUTOMOBILES CITROEN, 92200 Neuilly-sur-Seine (FR)
(72) Inventeur: Froumajou, Armand, F-95520 Osny (FR)
(74) Mandataire: Jacobson, Claude

(56) Documents cités:
- EP-A- 0 034 531
- EP-A- 0 252 805
- DE-A- 2 032 806
- FR-A- 2 296 541
- FR-A- 2 564 785
- US-A- 3 311 364
- PATENT ABSTRACTS OF JAPAN vol. 8, no. 182 (M-319)(1619) 22 août 1984, & JP-A-59 75811 (FUJI JUKOGYO) 28 avril 1984,

## Description

La présente invention est relative à un train de roues arrière pour véhicule automobile, du type comprenant des éléments de guidage des roues articulés sur un berceau intermédiaire rigide, lequel est relié à la caisse du véhicule par des moyens de liaison élastiques comprenant un dispositif de liaison antérieur situé en avant des roues et un dispositif de liaison postérieur, l'un de ces dispositifs comprenant deux attaches élastiques latérales à effet directeur qui présentent une faible flexibilité dans une direction horizontale les reliant à un axe vertical situé en arrière des roues et une grande flexibilité dans la direction horizontale perpendiculaire à cette direction.

Les trains arrière à berceau intermédiaire assurent un bon filtrage des vibrations, mais la déformabilité des moyens de liaison élastiques provoque un effet de micro-braquage sur-vireur lors des virages, sous l'action du couple naturel constitué par la force centrifuge agissant sur la caisse du véhicule et par la réaction du sol sur les roues.

Pour que le micro-braquage devienne sous-vireur et donc favorable à la stabilité du véhicule en virage, le FR-A-2 116 991 a proposé un train arrière du type indiqué plus haut, comportant les caractéristiques du préambule de la revendication 1.

Bien que cet agencement connu soit théoriquement satisfaisant, il est difficile à réaliser en pratique. En effet, les attaches à effet directeur constituent le dispositif de liaison antérieur, lequel doit être situé très en avant de l'essieu arrière pour pouvoir reprendre efficacement le couple de freinage. Il en résulte un couple naturel important à effet sur-vireur, difficile à compenser par l'effet directeur des attaches élastiques. De plus, pour la même raison, l'effet sous-vireur correspond à un déplacement latéral important au niveau des attaches à effet directeur, ce qui accroît leurs difficultés de réalisation.

L'invention a pour but de permettre la compensation de l'effet sur-vireur du couple naturel avec un agencement plus facile à réaliser en pratique.

A cet effet, l'invention a pour objet un train arrière du type précité, caractérisé en ce que les attaches à effet directeur constituent le dispositif de liaison postérieur et sont disposées au voisinage du plan vertical passant par le centre des roues.

De préférence, le dispositif de liaison antérieur est plus flexible que le dispositif de liaison postérieur vis-à-vis de la rotation du berceau autour dudit axe vertical. Il peut notamment comprendre deux attaches élastiques latérales ayant une flexibilité à peu près uniforme dans toutes les directions horizontales.

Quelques exemples de réalisation de l'invention vont maintenant être décrits en regard des dessins annexés, sur lesquels ;
- la Fig. 1 est une vue schématique en plan d'un train arrière conforme à l'invention ;
- la Fig. 2 illustre schématiquement, également en plan, le fonctionnement du train arrière de la Fig. 1 ;
- la Fig. 3 est une vue de dessous d'une attache élastique à effet directeur du même train arrière ;
- la Fig. 4 est une vue prise en coupe suivant la ligne IV-IV de la Fig. 3 ;
- la Fig. 5 est une vue en bout d'une variante d'attache élastique à effet directeur ;
- la Fig. 6 est une vue prise en coupe sui vant la ligne VI-VI de la Fig. 5 ;
- la Fig. 7 est une vue en bout d'une attache élastique sans effet directeur du train arrière de la Fig. 1 ; et
- la Fig. 8 est une vue prise en coupe suivant la ligne VIII-VIII de la Fig 7.

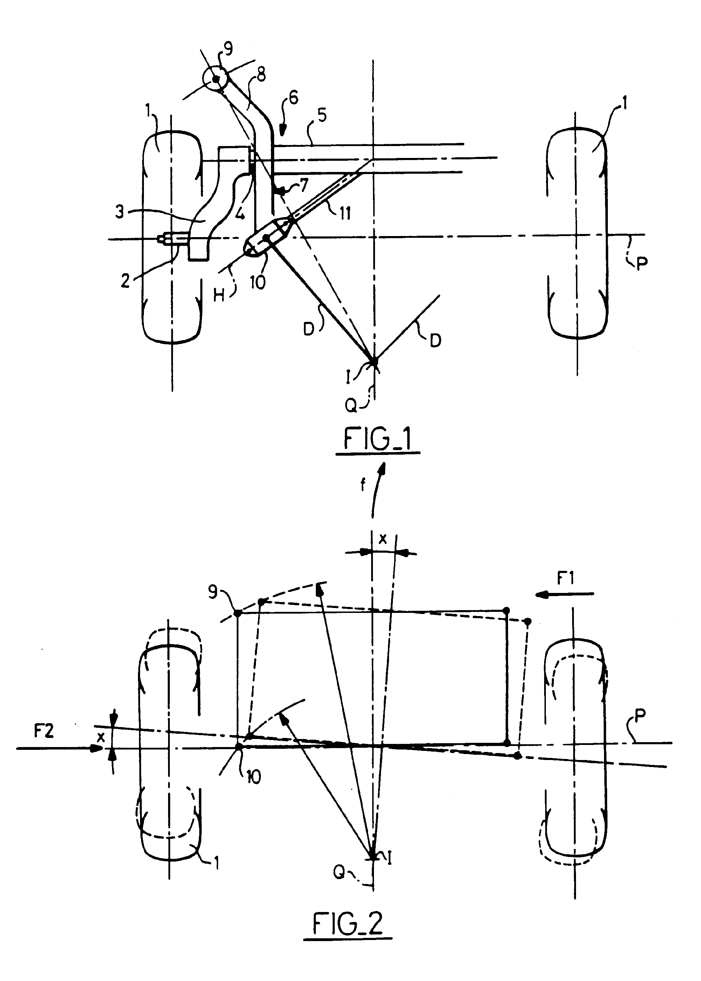

Le train arrière pour véhicule automobile représenté à la Fig. 1 comprend deux roues 1 dont les axes se trouvent sensiblement dans un même plan vertical P perpendiculaire au plan de symétrie longitudinal Q du véhicule. Chaque roue est montée sur une fusée 2 portée par l'extrémité arrière d'un bras tiré 3 servant au guidage de la roue. L'extrémité avant de chaque bras 3 est fixé à l'extrémité correspondante d'une traverse 4 qui tourillonne dans une traverse tubulaire 5 d'un berceau intermédiaire 6.

Le berceau 6 comprend, outre la traverse 5, deux longeronnets 7 fixés par leur partie médiane aux extrémités respectives de cette traverse. L'extrémité avant 8 de chaque longeronnet est coudée vers l'extérieur et est reliée à la caisse (non représentée) du véhicule par une attache élastique non directrice 9. L'extrémité arrière du longeronnet est reliée à la caisse du véhicule par une attache élastique 10 à effet directeur, et le berceau est rigidifié par un raidisseur diagonal 11 qui s'étend de l'extrémité arrière de chaque longeronnet à la région médiane de la traverse 5.

Chaque attache 10 présente une direction D de faible flexibilité, les deux directions D se croisant dans le plan Q, en un point I situé en arrière du plan P. Chaque attache 10 présente en outre une grande flexibilité dans la direction H perpendiculaire à la direction D.

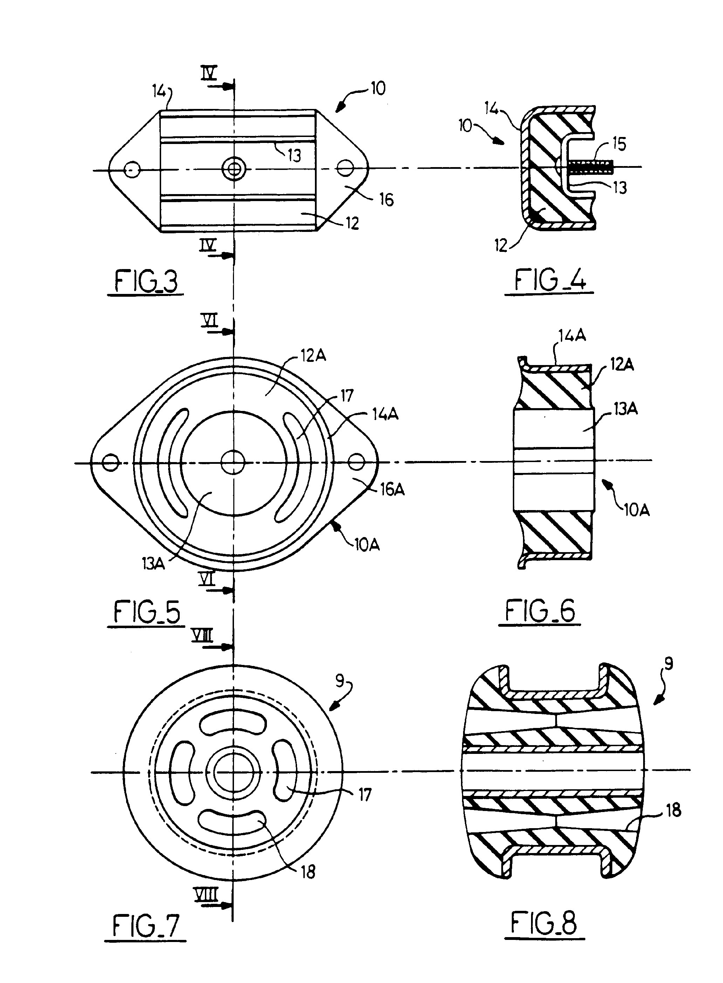

Les Fig. 3 et 4 représentent un exemple d'attache 10 présentant ces propriétés : un bloc rectiligne 12 à section transversale en U, en matière élastomère, est pris en sandwich entre deux armatures rectilignes inférieure 13 et supérieure 14 auxquelles il est lié par ses surfaces inférieure et supérieure par adhérisation Les faces d'extrémité du bloc 12 sont libres et de préférence associées à des moyens connus non représentés de limitation de débattement relatif des deux armatures en direction longitudinale. L'armature 13 est fixée au longeronnet 7 correspondant au moyen d'une vis 15, et des pattes 16 solidaires de l'armature 14 permettent la fixation de celle-ci sur la caisse du véhicule. Comme on le voit sur la Fig. 1, l'axe longitudinal de l'attache 10 coincide avec la direction H définie plus haut. Ainsi, l'attache 10 présente une faible flexibilité tant verticalement que suivant la direction D (travail en compression de l'élastomère) et une grande flexibilité suivant la direction H (travail en cisaillement de l'élastomère).

Les Fig. 5 et 6 montrent une cale cylindrique alvéolée 10A pouvant remplacer une attache 10: un bloc cylindrique annulaire 12A en matière élastomère est maintenu par adhérisa tion entre un moyeu 13A et une enveloppe extérieure 14A, auxquels il est lié par ses surfaces intérieure et extérieure. L'enveloppe 14A porte des pattes 16A de fixation à la caisse, et une vis (non représentée) traversant le moyeu permet la fixation de celui-ci à un longeronnet 7. Deux alvéoles arqués 17 diamétralement opposés sont prévus dans le bloc 12A, dans la direction H.

Les Fig. 7 et 8 représentent une cale 9 analogue à la cale 10A mais comportant deux alvéoles supplémentaires 18 diamétralement opposés, disposés à 90° des alvéoles 17. La cale 9 présente ainsi une grande flexibilité dans toutes les directions horizontales ainsi que suivant son axe vertical.

En fonctionnement (Fig. 2), lors d'un virage par exemple à droite (sens de la flèche f), la force centrifuge F1 s'applique sur le berceau 6, et une force de réaction opposée F2 est appliquée par la chaussée sur les roues. Grâce à l'effet directeur des attaches 10, le berceau pivote d'un petit angle de micro- braquage x dans le sens sous-vireur autour de l'axe vertical passant par le point I, comme indiqué en trait interrompu sur la Fig. 2.

Les attaches antérieures 9, n'ayant aucune fonction directrice, servent uniquement à reprendre le couple de basculement lors du freinage. Elles peuvent donc avoir une flexibilité supérieure à celle des attaches 10 vis-à-vis de la rotation de micro-braquage et, par suite, ne pas contrarier cette dernière et assurer un bon filtrage des vibrations.

Il est à noter également que les attaches directrices 10 fonctionnent dans de bonnes conditions car l'effort F2 leur est directement appliqué.

Les attaches 9 présentant une certaine souplesse dans la direction verticale, elles comportent ou sont associées à un dispositif limiteur de débattement, usuel et non représenté, pour encaisser les efforts violents de freinage.

Les raidisseurs 11 , soudés ou boulonnés, permettent d'éviter toute flexion parasite de l'extrémité arrière des longeronnets sous l'effet des efforts transversaux.

L'invention s'applique à tous les trains arrière comprenant un berceau intermédiaire rigide, quelle que soit la disposition des éléments de guidage de la roue tels que bras, triangles, biellettes, et quelle que soit la configuration du berceau.

## Revendications

1. Train de roues arrière pour véhicule automobile, du type comprenant des éléments (3) de guidage des roues (1) articulés sur un berceau intermédiaire rigide (6), lequel est relié à la caisse du véhicule par des moyens de liaison élastiques (9, 10) comprenant un dispositif de liaison antérieur (9) situé en avant des roues et un dispositif de liaison postérieur (10), l'un de ces dispositifs comprenant deux attaches élastiques latérales (10) à effet directeur qui présentent une faible flexibilité dans une direction horizontale (D) les reliant à un axe vertical (I) situé en arrière des roues et une grande flexibilité dans la direction horizontale (H) perpendiculaire à cette direction, caractérisé en ce que les attaches à effet directeur (10) constituent le dispositif de liaison postérieur et sont disposées au voisinage du plan vertical (P) passant par le centre des roues.

2. Train de roues arrière suivant la revendication 1, caractérisé en ce que le dispositif de liaison antérieur (9) est plus flexible que le dispositif de liaison postérieur vis-à-vis de la rotation du berceau (6) autour dudit axe vertical.

3. Train de roues arrière suivant l'une des revendications 1 et 2, caractérisé en ce que le dispositif de liaison antérieur (9) comprend deux attaches élastiques latérales ayant une flexibilité à peu près uniforme dans toutes les directions horizontales.

4. Train de roues arrière suivant l'une quelconque des revendications 1 à 3, caractérisé en ce que chaque attache à effet directeur (10) est constituée par un bloc élastique (12) pris en sandwich entre deux organes de support parallèles (13, 14) qui sont orientés dans la direction (H) de grande flexibilité de l'attache.

5. Train de roues arrière suivant l'une quelconque des revendications 1 à 3, caractérisé en ce que chaque attache à effet directeur est constituée par une cale alvéolée (10A).

6. Train de roues arrière suivant l'une quelconque des revendications 1 à 5, caractérisé en ce que le berceau (6) comprend une traverse (5) solidaire à chaque extrémité d'un longeronnet (7) muni d'une attache élastique (9, 10) à chaque extrémité, et deux raidisseurs diagonaux (11) reliant la région centrale de la traverse à l'extrémité arrière des longeronnets.

## Patentansprüche

1. Hinterradaufhängung für Kraftfahrzeuge, bestehend aus Elementen (3) zur Führung der Räder (1), die an einem starren Zwischenlagergestell (6) angelenkt sind, das mit der Karosserie des Fahrzeugs über elastische Verbindungsmittel (9, 10) verbunden ist, die eine vor den Rädern angeordnete vordere Verbindungsvorrichtung (9) und eine hintere Verbindungsvorrichtung (10) umfassen, deren eine zwei seitliche elastische Verbindungsblöcke (10) mit Lenkwirkung umfaßt, die eine geringe Flexibilität in einer horizontalen Richtung (D), die diese mit einer hinter den Rädern gelegenen vertikalen Achse (I) verbindet, und eine hohe Flexibilität in der zu dieser Richtung senkrechten horizontalen Richtung (H) besitzen, dadurch gekennzeichnet, daß die Verbindungsblöcke (10) mit Lenkwirkung die hintere Verbindungsvorrichtung bilden und in Nähe der durch den Mittelpunkt der Räder laufenden vertikalen Ebene (P) angeordnet sind.

2. Hinterradaufhängung nach Anspruch 1, dadurch gekennzeichnet, daß die vordere Verbindungsvorrichtung (9) bezüglich der Drehung des Lagergestells (10) um diese vertikale Achse flexibler als die hintere Verbindungsvorrichtung ist.

3. Hinterradaufhängung nach einem der Ansprüche 1 und 2, dadurch gekennzeichnet, daß die vordere Verbindungsvorrichtung (9) zwei seitliche elastische Verbindungsblöcke umfaßt, die eine ungefähr gleichmäßige Flexibilität in allen horizontalen Richtungen besitzt.

4. Hinterradaufhängung nach einem der Ansprüche 1 bis 3, dadurch gekennzeichnet, daß jeder Verbindungsblock (10) mit Lenkwirkung aus einem elastischen Block (12) besteht, der sandwichartig zwischen zwei parallelen Tragorganen (13, 14) eingeschlossen ist, die in der Richtung (H) hoher Flexibilität des Verbindungsblocks ausgerichtet sind.

5. Hinterradaufhängung nach einem der Ansprüche 1 bis 3, dadurch gekennzeichnet, daß jeder Verbindungsblock mit Lenkwirkung aus einem Zellen aufweisenden Block (10A) besteht.

6. Hinterradaufhängung nach einem der Ansprüche 1 bis 5, dadurch gekennzeichnet, daß das Lagergestell (6) einen Querträger (5), an dem an jedem Ende ein an jedem Ende mit einem elastischen Verbindungsblock (9, 10) versehener Längsträger (7) befestigt ist, und zwei diagonale Versteifungen (11) umfaßt, die den zentralen Bereich des Querträgers mit dem hinteren Ende der Längsträger verbinden.

## Claims

1. Rear wheel suspension for a motor vehicle, of the type comprising members (3) for guiding wheels (1), which members are pivoted on a rigid intermediate bearer (6), which is connected to the body of the vehicle by resilient connecting means (9, 10) comprising a front connection device (9) situated in front of the wheels and a rear connection device (10), one of these devices comprising two resilient side links (10) with a guiding action, which have low flexibility in a horizontal direction (D) connecting them to a vertical axis (I) situated to the rear of the wheels and great flexibility in the horizontal direction (H) perpendicular to this direction, characterised in that the links (10) with a guiding action constitute the rear connection device and are disposed in the vicinity of the vertical plane (P) passing through the centre of the wheels.

2. Rear wheel suspension according to Claim 1, characterised in that the front connection device (9) is more flexible than the rear connection device with regard to the rotation of the bearer (6) about said vertical axis.

3. Rear wheel suspension according to one of Claims 1 and 2, characterised in that the front connection device (9) comprises two resilient side links having roughly uniform flexibility in all horizontal directions.

4. Rear wheel suspension according to one of Claims 1 to 3, characterised in that each link (10) with a guiding action is constituted by a resilient block (12) sandwiched between two parallel support members (13, 14) which are oriented in the direction (H) of great flexibility of the link.

5. Rear wheel suspension according to one of Claims 1 to 3, characterised in that each link with a guiding action is constituted by a honeycombed wedge (10A).

6. Rear wheel suspension according to one of Claims 1 to 5, characterised in that the bearer (6) comprises a cross piece (5) integral at each end with a small side member (7) provided with a resilient link (9, 10) at each end, and two diagonal tightening members (11) connecting the central region of the cross piece to the rear end of the small side members.
